(19) Europäisches Patentamt
European Patent Office
Office européen des brevets

(11) EP 2 507 306 B1

(12) # EUROPEAN PATENT SPECIFICATION

(45) Date of publication and mention of the grant of the patent:
**18.01.2017 Bulletin 2017/03**

(21) Application number: **10782620.8**

(22) Date of filing: **29.11.2010**

(51) Int Cl.:
***C08K 5/00*** *(2006.01)* ***C08K 5/3432*** *(2006.01)*
***C08L 23/00*** *(2006.01)* ***C08L 101/00*** *(2006.01)*
***B32B 27/18*** *(2006.01)* ***B32B 27/32*** *(2006.01)*
***C08L 23/02*** *(2006.01)* ***C08L 23/08*** *(2006.01)*
***C08L 45/00*** *(2006.01)* ***C08L 57/02*** *(2006.01)*
***C08L 23/18*** *(2006.01)*

(86) International application number:
**PCT/EP2010/068374**

(87) International publication number:
**WO 2011/067198 (09.06.2011 Gazette 2011/23)**

(54) **USE OF METAL COMPLEXES AS OXYGEN ABSORBER/SCAVENGER ELEMENTS FOR PACKAGING APPLICATIONS**

VERWENDUNG VON METALLKOMPLEXEN ALS SAUERSTOFFABSORBER-/-SAMMELELEMENTE FÜR VERPACKUNGSANWENDUNGEN

UTILISATION DE COMPLEXES MÉTALLIQUES EN TANT QU'ÉLÉMENTS D'ABSORPTION D'OXYGÈNE/DÉSOXYGÉNANTS POUR DES APPLICATIONS DE CONDITIONNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.12.2009 EP 09177741**

(43) Date of publication of application:
**10.10.2012 Bulletin 2012/41**

(73) Proprietor: **BASF SE**
**67056 Ludwigshafen am Rhein (DE)**

(72) Inventors:
- **MENOZZI, Edoardo**
  **CH-4056 Basel (CH)**
- **GALFRÉ, Enrico**
  **I-12100 Cuneo (IT)**
- **RUGGERI, Nazzareno**
  **I-40048 San Benedetto Val di Sambro (BO) (IT)**

(74) Representative: **BASF IP Association**
**BASF SE**
**ZRX-C6**
**67056 Ludwigshafen (DE)**

(56) References cited:
**WO-A1-98/51758** **WO-A1-98/51759**
**WO-A1-2007/028731** **US-A- 2 320 716**
**US-A- 4 888 032** **US-A1- 2007 298 962**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 507 306 B1

## Description

People increasingly demand packaging materials that protect their contents better especially in the food and pharmaceutical industries, but now also in other industries such as agricultural chemicals, electronics and healthcare. As plastic have become more and more common in these applications, there have been many concerns about how well they allow the exchange of gases and vapours that can compromise the quality and safety of the packaged product. Presence of oxygen, by direct chemical reaction or as enabler of spoiling bacteria, is one of the main sources of spoilage of goods that, in the modern economy, are transported from one point of the earth to the other or stored for long periods of time. Consequently, the packaging industry has long attempted to displace the oxygen inside packages, replacing it with inert gases (modified atmosphere packaging, MAP), and to block the passage of oxygen from the outside to the inside of such packages using passive barrier materials with low permeability to oxygen. Even if each of the above techniques has its place in the industry, it is well recognized that the inclusion of an oxygen scavenger as a part of the packaging article is one of the most desirable means of limiting oxygen.

The problem is particularly felt for PET (polyethylene terephthalate), which is in itself a good passive barrier to oxygen and is the packaging material of choice especially for beverages. A number of technologies have been devised to scavenge the low concentration of oxygen able to pass the PET passive barrier, and therefore granting an actually oxygen-free period of time for the package content. In general, such technologies are based on the catalyzed oxidation of compounds additivated to the main polymer or as/in separate co-extruded layers, without resorting to any activation mechanism. They rely on an efficient transfer of the packaging material from the manufacturer to the final industrial user to address the issue of exhaustion of the active component by reaction with atmospheric oxygen, with inconsistent results.

Other schemes have been devised that instead rely on some activation mechanism that sets the moment when reaction with oxygen of the scavenging chemistry begins to occur at a different point in time than the manufacture of the packaging plastic. In the system sold by Sealed Air, for example, such activation is achieved by UV irradiation on the packaging line, which must be modified to use this system. Activity and safety concerns are also present. The Fe-based chemical additive now commercialized by Albis (previously by Ciba Specialty Chemicals), instead, relies on the water present in the packaged item itself as the trigger for the oxygen scavenging process. However, such water requirement is substantial, and the quantity of additive necessary for sufficient activity notably darkens even thin plastic sheets. Such effect is undesirable since consumers prefer being able to see clearly the food containned inside the package they are buying.

Another approach to achieving or maintaining a low oxygen environment inside a package is to use a packet containing an oxygen absorbent material. The packet, also sometimes referred to as a pouch or sachet, is placed in the interior of the package along with the product. Sakamoto et al. discloses oxygen absorbent packets in Japan Laid Open Patent application No. 121634/81 (1981).

Although oxygen absorbent or scavenger materials used in packets, as reduce iron powder, sodium chloride electrolyte system and water absorbing agent such as silica gel, can react chemically with oxygen in the package (head space oxygen), they do not prevent external oxygen from penetrating into the package. Thus for such type of packaging it is common to include additional protection such as wrappings or passive barrier films (ethylene vinyl alcohol copolymer EVOH, polyvinylidene dichloride PVDC, etc...) which inevitably add costs to product. Furthermore with many easy to prepare foods, another difficulty with oxygen scavenger packets is that consumers may mistakenly open them and consume their contents together with food. Moreover, the extra manufacturing step of placing a packet into a container can add to the cost of the product and slow down production. Further, oxygen absorbent packets are not useful with liquid products.

Therefore, none of the systems currently available possess all the characteristics to satisfy the stringent market requirements for the packaging of fresh or prepared foods.

The current invention addresses some of the issues limiting the exploitation of this useful technology.

An object of the present invention is therefore to provide improved oxygen-scavenging compositions and packagings. Another object is to provide low costs, oxygen-scavenging compositions of improved efficiency. Another object is to provide oxygen scavenging composition that can be used effectively, even at relatively low levels, in a wide range of active-barrier packaging films and sheets, including laminated and coextruded multilayer films and sheets. Another object is ti provide active-barrier packaging containers that can increase the shelf-life of oxygen-sensitive products by slowing the passage of external oxygen into the container, by absorbing oxygen present inside the container or both. Other objects will be apparent to those skilled in the art.

It has been observed that the use of the inventive oxygen-scavenging composition enhances the resistance of the packed food products against the oxygen attact.

Thus the present invention relates to an oxygen scavenger composition for food packaging application comprising

(I) A polymeric resin preferably a thermoplastic polymers

Homo and copolymers of olefin monomers such as ethylene and propylene, but also higher 1-olefins such as 1-butene, 1-pentene, 1-hexene or 1-octen. Preferred is polyethylene LDPE and LLDPE, HDPE and polypropylene;
Homo- and copolymers of olefin monomers with diolefin monomers such as butadiene, isoprene and cyclic olefins such as norbornene;
Copolymers of one ore more 1-olefins and/or diolefins with carbon monoxide and/or with other vinyl monomers, including, but not limited to, acrylic acid and its corresponding acrylic esters, methacrylic acid and its corresponding esters, vinyl acetate, vinyl alcohol, vinyl ketone, styrene, maleic acid anhydride and vinyl chloride;
Polyvinyl alcohol;
(II) A metal organic oxidation additives based on a chelating aromatic or non aromatic amine and transition metal complex as defined in the examples below. These organic metal oxidation additive complexes are generally based on Co, Ce, Mn, Cu, Ni, Vd, Fe, Ti. Preferably these nitrogen ligand oxidation additives are metal salts of fatty acids with a carbon number raging from $C_{12}$ to $C_{36}$. Most preferred are metals carboxylates of palmitic ($C_{16}$), stearic ($C_{18}$), oleic ($C_{18}$), linolic ($C_{18}$) and linoleic ($C_{18}$) acid. Preferably the transition metal salt is Manganese, Copper, Iron or Cobalt and most preferably Manganese or Copper which may be present in a total concentration from 0.001-10 wt%, preferably 0.01-5 wt% and most preferably 0.1-5 wt% based on the polymeric resin. Also possible are metal salts of propionic ($C_3$), acetic ($C_2$), formic ($C_1$) or benzoic acid. It is also possible that the counter ions in the metal complexes are halogens and preferably but not limited to chloride, bromide and Iodide. The oxidation additive(s) may be present in total in a concentration from 0.001-10 wt%, preferably 0.01-5 wt% and most preferably 0.1-5 wt% based on the polymeric resin;
(III) Sacrificial oxidizable substrates like polybutadiene, polyester, squalane, squalene, polystyrene, poly-limonene, poly alpha pinene, poly beta pinene, polynorbornene, polylactic acid, mixture of linear and branched alkyl chains alcohol (R: $C_6$-$C_{30}$). Preferably these oxidizable substrates are present in a total concentration from 0.001-10 wt%, preferably 0.01-5 wt% and most preferably 0.1-5 wt% based on the polymeric resin;
and optionally
(IV) additional components.

The metal organic oxidation catalysts of this invention relates to a metal complex compounds of formula

$$[L_nMe_mX_p]^zY_q$$

wherein

Me is manganese, copper, cobalt, nickel, iron, cerium, vanadium or titanium
X is a coordinating or bridging radical
*n and* m are each independently to each other an integer having a value from 1 to 8
p is an integer having a value from 0 to 32
z is the charge of the metal complex
Y is a counter ion
*q*=z (charge Y), and
L is a ligand of formula:

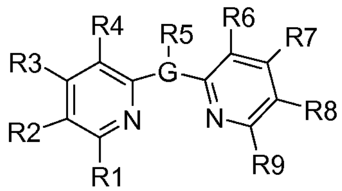

wherein

$R_1$, $R_2$, $R_3$, $R_4$, $R_5$, $R_6$, $R_7$, $R_8$ and $R_9$ are each independently of the others hydrogen; unsubstituted or substituted $C_1$-$C_{18}$ alkyl or aryl; cyano; halogen; nitro; -$COOR_{10}$ or -$SO_3R_{10}$ wherein $R_{10}$ is in each case hydrogen, a cationic or unsubstituted or substituted $C_1$-$C_{18}$ alkyl or aryl; - $SR_{11}$, -$SO_2R_{11}$ or -$OR_{11}$ wherein $R_{11}$ is in each case hydrogen or unsubstituted or substituted $C_1$-$C_{18}$ alkyl or aryl; -N($R_{11}$)-NR'$_{11}$R"$_{11}$ wherein $R_{11}$, R'$_{11}$ and R"$_{11}$ are as defined above for $R_{11}$;-$NR_{12}R_{13}$ or -$WR_{12}R_{13}R_{14}$ wherein $R_{12}$, $R_{13}$ and $R_{14}$ are each independently of the other(s) hydrogen or unsubstituted or substituted $C_1$-$C_{18}$ alkyl or aryl, or $R_{12}$ and $R_{13}$ together with the nitrogen atom bonding them form an unsubstituted or substituted 5-, 6- or 7-membered ring which may optionally contain

further hetero atoms;
and wherein G is phenyl or naphthyl unsubstituted or substituted $C_1$-$C_6$ alkyl, $C_1$-$C_6$ alkoxy, halogen, cyano, nitro carboxyl, sulfo, hydroxyl, amino, N-mono- or N,N-di- $C_1$-$C_6$ alkylamino unsubstituted or substituted by hydroxyl in the alkyl moiety, N-phenylamino, N-naphthyl-amino, phenyl, phenoxy or naphthoxy. Preferred substituents are pyridyl, imidazole or piperidine groups,

Particularly preferred are the compounds given in the following tables:

| Example | 1 | 2 | 3 |
|---|---|---|---|
| Structure | 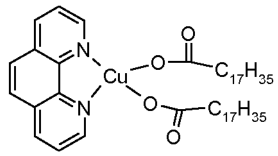 | 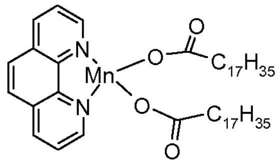 | 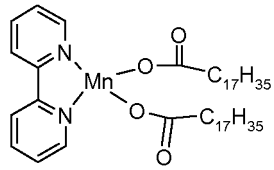 |
| | | | |
| Example | 4 | 5 | 6 |
| Structure | 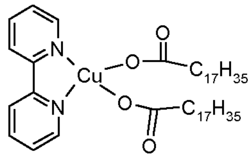 | 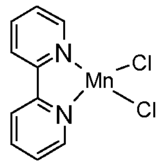 | 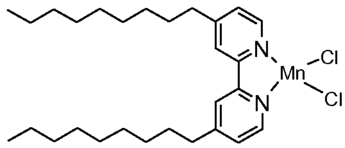 |
| | | | |
| Example | 7 | 8 | |
| Structure | 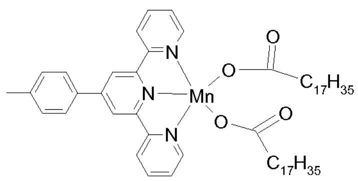 | 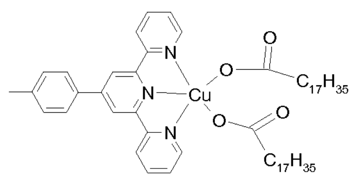 | |

Particularly preferred starting materials for the oxidant additives of the above cited examples are commercially available compounds, for example
manganese stearate
copper stearate
manganese chloride
2,2'-bipyridine
1,10-phenanthroline
4'-(p-tolyl)-2,2':6',2"-terpyridine
4,4'-dinonyl-2,2'-dipyridyl
Poly-alpha-pinene
Poly-beta-pinene
Poly limonene

The optional additional component includes:

- Fillers and reinforcing agents such as calcium carbonate, silicas, glass fibres, glass bulbs, talc, kaolin, mica, barium sulfate, metal oxides and hydroxides, carbon black, graphite, wood flour, flours of other natural products, synthetic fibers, stearates used as fillers such as calcium stearate on zinc stearate;
- Pigments such as carbon black, titanium dioxide in its rutil or anatase forms, and other color pigments;
- Light stabilizers, antioxidants and/or further light stabilizers such as e.g.:

1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-meth-oxymethylphenol, nonylphenols which are linear or branched in the side chains, for example, 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol and mixtures thereof.

2. Alkylthiomethylphenols, for example 2,4-dioctylthiomethyl-6-tert-butylphenol, 2,4-dioctyl-thiomethyl-6-methylphenol, 2,4-dioctylthiomethyl-6-ethylphenol, 2,6-di-dodecylthiomethyl-4-nonylphenol.

3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis(3,5-di-tert-butyl-4-hydroxyphenyl) adipate.

4. Tocopherols, for example α-tocopherol, β-tocopherol, γ-tocopherol, δ-tocopherol and mixtures thereof (vitamin E).

5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol), 4,4'-bis(2,6-dimethyl-4-hydroxyphenyl)-disulfide.

6. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(a-methylcyclohexyl)-phenol], 2,2'-methylenebis(4-methyl-6-cyclohexylphenol), 2,2'-methylenebis(6-nonyl-4-methyl-phenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecylmercaptobutane, ethylene glycol bis[3,3-bis(3'-tert-butyl-4'-hydroxyphenyl)butyrate], bis(3-tert-butyl-4-hydroxy-5-methylphenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis(3,5-di-tert-butyl-4-hydroxyphenyl)propane, 2,2-bis(5-tert-butyl-4-hydroxy2-methylphenyl)-4-n-dodecylmercaptobutane, 1,1,5,5-tetra-(5-tert-butyl-4-hydroxy-2-methylphenyl)pentane.

7. O-, N- and S-benzyl compounds, for example 3,5,3',5'-tetra-tert-butyl-4,4'-dihydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide, isooctyl-3,5-di-tert-butyl-4-hydroxybenzylmercaptoacetate.

8. Hydroxybenzylated malonates, for example dioctadecyl-2,2-bis(3,5-di-tert-butyl-2-hydroxybenzyl)malonate, di-octadecyl-2-(3-tert-butyl-4-hydroxy-5-methylbenzyl)malonate, didodecylmercaptoethyl-2,2-bis (3,5-di-tert-butyl-4-hydroxybenzyl)malonate, bis[4-(1,1,3,3-tetramethylbutyl)phenyl]-2,2-bis(3,5-di-tert-butyl-4-hydroxybenzyl)malonate.

9. Aromatic hydroxybenzyl compounds, for example 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.

10. Triazine compounds, for example 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris(3,5-di-tert-butyl-4-hydroxyphenoxy)-1,2,3-triazine, 1,3,5-tris(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)isocyanurate.

11. Benzylphosphonates, for example dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid.

12. Acylaminophenols, for example 4-hydroxylauranilide, 4-hydroxystearanilide, octyl N-(3,5-di-tert-butyl-4-hydroxyphenyl)carbamate.

13. Esters of p-(3,5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

14. Esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis-(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane; 3,9-bis[2-{3-(3-tert-butyl-4-hydroxy-5-methylphenyl)propionyloxy}-1,1-dimethylethyl]-2,4,8,10-tetraoxaspiro[5.5]-undecane.

15. Esters of β-(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

16. Esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

17. Amides of β-(3,5-di-tert-butyl-4-hydroxyphenyl)propionic acid e.g. N,N'-bis(3,5-di-tert-butyl-4-hydroxyphenylpropionyl)hexamethylenediamide, N,N'-bis(3,5-di-tert-butyl-4-hydroxy-phenylpropionyl)trimethylenediamide, N,N'-bis(3,5-di-tert-butyl-4-hydroxyphenylpropionyl)hydrazide, N,N'-bis[2-(3-[3,5-di-tert-butyl-4-hydroxyphenyl]propionyloxy)ethyl]oxamide (Naugard®XL-1, supplied by Uniroyal).

18. Ascorbic acid (vitamin C)

19. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butylaminophenol, 4-butyrylaminophenol, 4-nonanoylaminophenol, 4-dodecanoylaminophenol, 4-octadecanoylaminophenol, bis(4-methoxyphenyl)amine, 2,6-di-tert-butyl-4-dimethylaminomethylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)propane, (o-tolyl)biguanide, bis[4-(1',3'-dimethylbutyl)phenyl]amine, tert-octylated N-phenyl-1-naphthylamine, a mixture of mono- and dialkylated tert-butyl/tert-octyldiphenylamines, a mixture of mono- and dialkylated nonyldiphenylamines, a mixture of mono- and dialkylated dodecyldiphenylamines, a mixture of mono- and dialkylated isopropyl/isohexyldiphenylamines, a mixture of mono- and dialkylated tert-butyldiphenylamines, 2,3-dihydro-3,3-di-methyl-4H-1,4-benzothiazine, phenothiazine, a mixture of mono- and dialkylated tert-butyl/tert-octylphenothiazines, a mixture of mono- and dialkylated tert-octyl-phenothiazines, N-allylphenothiazine, N,N,N',N'-tetraphenyl-1,4-diaminobut-2-ene.

20. 2-(2'-Hydroxyphenyl)benzotriazoles, for example 2-(2'-hydroxy-5'-methylphenyl)-benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chloro-benzotriazole, 2-(3'-tert-butyl-2'-hydroxy-5'-methylphenyl)-5-chloro-benzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis-(a,a-dimethylbenzyl)-2'-hydroxyphenyl)benzotriazole, 2-(3'-tert-butyl-2'-hydroxy-5'-(2-octyloxycarbonylethyl)phenyl)-5-chloro-benzotriazole, 2-(3'-tert-butyl-5'-[2-(2-ethylhexyloxy)-carbonylethyl]-2'-hydroxyphenyl)-5-chloro-benzotriazole, 2-(3'-tert-butyl-2'-hydroxy-5'-(2-methoxycarbonylethyl)phenyl)-5-chloro-benzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylene-bis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300;

$$[R-CH_2CH_2-COO-CH_2CH_2]_2,$$

where R = 3'-tert-butyl-4'-hydroxy-5'-2H-benzotriazol-2-ylphenyl, 2-[2'-hydroxy-3'-(α,α-dimethylbenzyl)-5'-(1,1,3,3-tetramethylbutyl)-phenyl]-benzotriazole; 2-[2'-hydroxy-3'-(1,1,3,3-tetramethylbutyl)-5'-(α,α-dimethylbenzyl)-phenyl]benzotriazole.

21. 2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.

22. Esters of substituted and unsubstituted benzoic acids, for example 4-tert-butyl-phenyl salicylate, phenyl salicylate, octylphenyl salicylate, dibenzoyl resorcinol, bis(4-tert-butylbenzoyl)resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.

23. Acrylates, for example ethyl α-cyano-β,β-diphenylacrylate, isooctyl α-cyano-β,β-diphenylacrylate, methyl α-carbomethoxycinnamate, methyl α-cyano-β-methyl-p-methoxycinnamate, butyl α-cyano-β-methyl-p-methoxy-cinnamate, methyl α-carbomethoxy-p-methoxycinnamate, N-(β-carbomethoxy-β-cyanovinyl)-2-methylindoline, neopentyl tetra(α-cyano-β,β-diphenylacrylate.

24. Sterically hindered amines, for example carbonic acid bis(1-undecyloxy-2,2,6,6-tetra-methyl-4-piperidyl)ester, bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butanetetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)malonate, 3-n-octyl-7,7,9,9-tetramethyl-1,3,8-triazaspiro[4.5]decane-2,4-dione, bis(1-octyloxy-2,2,6,6-tetramethylpiperidyl)sebacate, bis(1-octyloxy-2,2,6,6-tetramethylpiperidyl)succinate, linear or cyclic condensates of N,N'-bis(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl)-1,3,5-triazine and 1,2-bis(3-aminopropylamino)ethane, the condensate of 2-chloro-4,6-di-(4-n-butylamino-1,2,2,6,6-pentamethylpiperidyl)-1,3,5-triazine and 1,2-bis(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidine-2,5-dione, 3-dodecyl-1-(1,2,2,6,6-pentamethyl-4-piperidyl)pyrrolidine-2,5-dione, a mixture of 4-hexadecyloxy- and 4-stearyloxy-2,2,6,6-tetramethylpiperidine, a condensate of N,N'-bis(2,2,6,6-tetramethyl-4-piperidyl)hexamethylenediamine and 4-cyclohexylamino-2,6-dichloro-1,3,5-triazine, a condensate of 1,2-bis(3-aminopropylamino)ethane and 2,4,6-trichloro-1,3,5-triazine as well as 4-butylamino-2,2,6,6-tetramethylpiperidine (CAS Reg. No. [136504-96-6]); a conden-sate of 1,6-hexanediamine and 2,4,6-trichloro-1,3,5-triazine as well as N,N-dibutylamine and 4-butylamino-2,2,6,6-tetramethylpiperidine (CAS Reg. No. [192268-64-7]); N-(2,2,6,6-tetramethyl-4-piperidyl)-n-dodecylsuccinimide, N-(1,2,2,6,6-pentamethyl-4-piperidyl)-n-dodecylsuccinimide, 2-undecyl-7,7,9,9-tetramethyl-1-oxa-3,8-diaza-4-oxo-spiro[4,5]decane, a reaction product of 7,7,9,9-tetramethyl-2-cycloundecyl-1-oxa-3,8-diaza-4-oxospiro-[4,5]decane and epichlorohydrin, 1,1-bis(1,2,2,6,6-pentamethyl-4-piperidyloxycarbonyl)-2-(4-methoxyphenyl)ethene, N,N'-bis-formyl-N,N'-bis(2,2,6,6-tetramethyl-4-piperidyl)hexamethylenediamine, a diester of 4-methoxymethylenemalonic acid with 1,2,2,6,6-pentamethyl-4-hydroxypiperidine, poly[methylpropyl-3-oxy-4-(2,2,6,6-tetramethyl-4-piperidyl)]siloxane, a reaction product of maleic acid anhydride-α-olefin copolymer with 2,2,6,6-tetramethyl-4-aminopiperidine or 1,2,2,6,6-pentamethyl-4-aminopiperidine, 2,4-bis[N-(1-cyclohexyloxy-2,2,6,6-tetramethylpiperidine-4-yl)-N-butylamino]-6-(2-hydroxyethyl)amino-1,3,5-triazine, 1-(2-hydroxy-2-methylpropoxy)-4-octadecanoyloxy-2,2,6,6-tetramethylpiperidine, 5-(2-ethylhexanoyl)oxymethyl-3,3,5-trimethyl-2-morpholinone, Sanduvor (Clariant; CAS Reg. No. 106917-31-1], 5-(2-ethylhexanoyl)oxymethyl-3,3,5-trimethyl-2-morpholinone, the reaction product of 2,4-bis[(1-cyclohexyloxy-2,2,6,6-piperidine-4-yl)butylamino]-6-chloro-s-triazine with N,N'-bis(3-aminopropyl)ethylenediamine), 1,3,5-tris(N-cyclohexyl-N-(2,2,6,6-tetramethylpiperazine-3-one-4-yl)amino)-s-triazine, 1,3,5-tris(N-cyclohexyl-N-(1,2,2,6,6-pentamethylpiperazine-3-one-4-yl)amino)-s-triazine.

25. Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted ox-anilides and mixtures of o- and p-ethoxy-disubstituted oxanilides.

26. 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyl-oxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethyl)-1,3,5-triazine, 2-[2-hydroxy-4-(2-hydroxy-3-octyloxypropyloxy)phenyl]-4,6-bis(2,4-dimethyl)-1,3,5-triazine, 2-[4-(dodecyloxy/tridecyloxy-2-hydroxypropoxy)-2-hydroxyphenyl]-4,6-bis(2,4-dimethylphenyl)-1,3,5-triazine, 2-[2-hydroxy-4-(2-hydroxy-3-dodecyloxypropoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxy-propoxy)phenyl]-1,3,5-triazine, 2-(2-hydroxyphenyl)-4-(4-methoxyphenyl)-6-phenyl-1,3,5-triazine, 2-{2-hydroxy-4-[3-(2-ethylhexyl-1-oxy)-2-hydroxypropyloxy]phenyl}-4,6-bis(2,4-di-methylphenyl)-1,3,5-triazine, 2,4-bis(4-[2-ethylhexyloxy]-2-hydroxyphenyl)-6-(4-methoxyphenyl)-1,3,5-triazine.

- processing additives such as antislip / antiblock additives, plasticizers, optical brighteners, antistatic agents and blowing agents,

The antioxidants may be present in amounts to stabilize the polymer during processing and forming steps, however large quantities are undesired in order not to prevent degradation.

The invention can be applied in all areas of packaging where oxygen scavenger activity is desired.
The final products can be any type of plastic product for food packaging applications, which needs enhanced oxygen scavenger activities.
For example, the polymeric component may be used to manufacture mono- or multilayer plastic films, sheets, laminates, bags, bottles, styrofoam cups, utensils, blister packages, boxes, package wrappings,. The articles may be manufactured by any process available to those of ordinary skill in the art including, but not limited to, extrusion, extrusion blowing, film casting, film blowing, calen-dering, injection molding, blow molding, compression molding, thermoforming, spinning, blow extrusion and rotational casting. In particular, this is of interest in the area of modify atmosphere ($CO_2$, $N_2$) food packaging. The rate of the oxygen uptake can simply be adjusted by changing the concentration of the additives i.e. if higher oxygen scavenger performance is desired, then higher amount of additives is added.

The metal organic oxidation additives, sacrificial oxidizable substrates and optionally other additional components can be admixted with the polymeric resin either simultaneously or in succession, or also immediately prior to the actual processing step.

Hence, the present invention further relates to an article made of or comprising a composition containing a polymeric resin as defined above, a metal organic oxidation additives based on a chelating aromatic or non aromatic amine and transition metal complex as defined above, sacrificial oxidizable substrates as defined above and optionally additional components as defined above.

The synthesis of the cited examples is best carried out as described in the following Examples. Incorporation of the various additives is best performed in a thermal compounding step, mixing thoroughly the oxidation additives and optional additives, followed by an extrusion of the physical blend at elevated temperature. Typically an extruder with suitable screw configuration is used for this step. The additives can also be added in the form of a preconfectioned masterbatch produced in a different manner. For the production of the desired article any appropriate machine can be used, depending on the final form of the article, for example a blow extruder in the case of films, a cast extrusion machine in the case of sheets or an injection-molding machine.

The examples below illustrate the invention in greater detail. All percentages and parts are by weight and all the reaction are carried out under nitrogen, unless stated otherwise.
Riblene GP20® low density polyethylene has been obtained from Polimeri Europa; Dercolyte® is a poly terpene product obtain from Les Derives Resiniques & Terpeniques; Manganese Stearate, $Mn(C_{18}H_{35}O_2)_x$, has been purchased from Shepherd Chemical; Copper Stearate, $Cu(C_{18}H_{35}O_2)_x$, has been purchased from H.L. Blachford Ltd. and Shelfplus $O_2$ 2400® has been obtain from ALBIS Chemicals.

<u>Example 1</u>: Synthesis of 1,10 phenanthrolin Copper Stearate metal complex

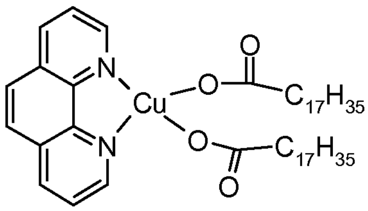
(1)

20.0 g of Copper Stearate were suspended in 300 ml MeOH at 70°C. 7.6 g of 1,10 phenanthroline are added to the solution and the reaction is heated at reflux for two hours. The solution is cooled at room temperature and the product has been precipitated from cold MeOH, filtered and dried under vacuum to give 12.2 g of complex (1) (Yield:

47.6%).
Melting point: 180-193°C.
Elemental analysis: Found: C: 70.71%; H: 9.62%; N: 3.47%. Theoretical: C: 71.11%; H: 9.70%; N: 3.46%. ICP Copper: 7.75%.

Example 2: Synthesis of 1,10 phenanthrolin Manganese Stearate metal complex

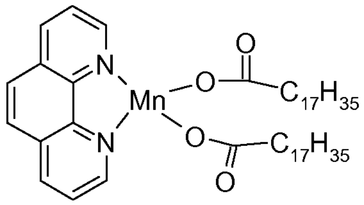
(2)

20.0 g of Manganese Stearate were dissolved in 1.5 l of Butanol at 70°C. 5.8 g of 1,10 phenanthroline are added to the solution and the reaction is heated at reflux for two hours. The product precipitated when the solution is cooled at room temperature, it was filtered, washed with cold MeOH and dried under vacuum to give 15.6 g of complex (2) (Yield: 60.5%).
Melting point: 120-123°C.
Elemental analysis: Found: C: 70.35%; H: 9.93%; N: 3.49%. Theoretical: C: 71.88%; H: 9.80%; N: 3.49%. ICP Manganese: 6.65%.

Example 3: Bipyridyl Manganese Stearate metal complex

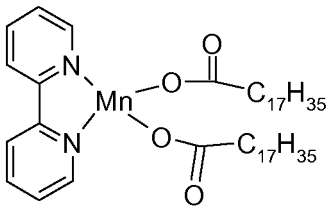
(3)

20.0 g of Manganese Stearate were dissolved in 150 ml of DMA at 70°C. 5.0 g of 2,2'-Bipyridine are added to the solution and the reaction is stirred for four hours. The product is precipitated with water, filtered and dried under vacuum to give 14.4 g of complex (3) (Yield: 57.6%). Melting point: 185-189°C.
Elemental analysis: Found: C: 69.10%; H: 10.29%; N: 3.52%. Theoretical: C: 71.01%;
H: 10.10%; N: 3.60%. ICP Manganese: 7.17%.

Example 4: Bipyridyl Copper Stearate metal complex

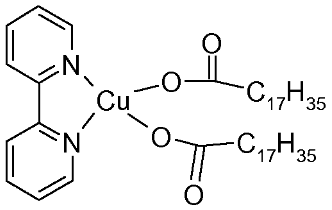
(4)

20.0 g of Copper Stearate were dissolved in 1000 ml of MeOH at reflux. 5.8 g of 2,2'-Bipyridine are added to the solution and the reaction is stirred for six hours. The product precipitated from the cold solution is filtered and dried under vacuum to give 20.1 g of complex (4) (Yield: 80.1 %). Melting point: 152-154°C

Elemental analysis: Found: C: 69.45%; H: 9.99%; N: 3.60%. Theoretical: C: 70.23%; H: 9.99%; N: 3.56%. ICP Copper: 8.02%.

Example 5: Bipyridyl Manganese Chloride metal complex

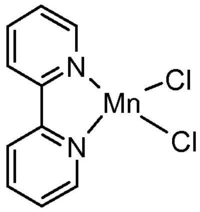

(5)

12.1 g of $MnCl_2$ were dissolved in 100 ml of EtOH at 60°C. 15.0 g of 2,2'-Bipyridine are added to the solution and the reaction is stirred for three hours. The precipitate is filtered off, washed with EtOH and dried under vacuum to give 25.9 g of complex 5 (Yield: 95.9%).
Melting point: >300°C.
Elemental analysis: Found: C: 43.02%; H: 2.91%; Cl: 25.19%; N: 10.02%. Theoretical: C: 42.59%; H: 2.86%; Cl: 25.14%; N: 9.93%. ICP Manganese: 19.56%.

Example 6: 4,4'-Dinonyl-2,2'-dipyridyl Manganese Chloride metal complex

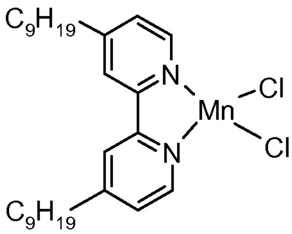

(6)

3.1 g of $MnCl_2$ were dissolved in 25 ml of EtOH at 60°C. 10.0 g of 4,4'-Dinonyl-2,2'-dipyridy are added to the solution and the reaction is stirred for two hours. The solvent is removed and the product precipitated from diethyl ether. To give 11.2 g of complex (6) (Yield: 85.7%).
Melting point: 270-274°C
Elemental analysis: Found: C: 62.66%; H: 8.21%; Cl: 13.12%; N: 5.16%. Theoretical: C: 62.92%; H: 8.30%; Cl: 13.27%; N: 5.24%. ICP Manganese: 11.12%.

Example 7: 4'-(p-Tolyl)-2,2':6',2"-terpyridine Manganese Stearate metal complex

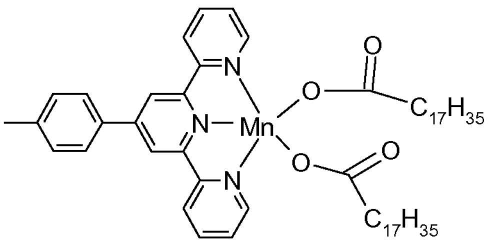

(7)

3.0 g of Manganese Stearate were suspended in 30 ml Butanol at 70°C. 3.1 g of 4'-(p-Tolyl)-2,2':6',2"-terpyridine are added to the solution and the reaction is stirred at reflux for two hours. The solvent is removed and the product has been precipitated from Acetone, filtered, and dried under vacuum to give 1.6 g of complex (7) (Yield: 35.8%).

Melting point: 161-167°C
Elemental analysis: Found: C: 72.38%; H: 8.81%; N: 4.49%. Theoretical: C: 73.70%; H: 9.28%; N: 4.45%. ICP Manganese: 5.91%

Example 8: 4'-(p-Tolyl)-2,2':6',2"-terpyridine Copper Stearate metal complex

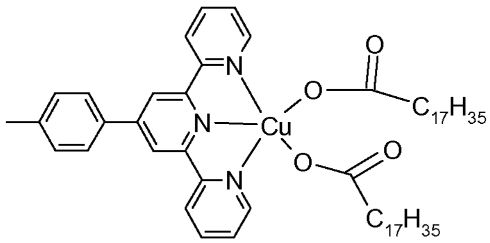
(8)

7.7 g of Copper Stearate were suspended in 100 ml of MeOH at 70°C. 4.0 g of 4'-(p-Tolyl)-2,2':6',2"-terpyridine are added to the solution and the reaction is stirred at reflux for two hours. The product is precipitated with water, filtered, washed with Acetone and dried under vacuum to give 11.2 g of complex (8) (Yield: 95.6%).
Melting point: 143-148°C
Elemental analysis: Found: C: 71.63%; H: 9.24%; N: 4.14%. Theoretical: C: 73.03%; H: 9.19%; N: 4.41 %. ICP Copper: 6.28%.

Comparative Sample 1:

Shelfplus $O_2$ 2400® was mixed in a 1:1 ratio with low density polyethylene, Riblene® so that the final Iron concentration was 5.0% by weight. Compounds were prepared with an OMC pilot double screw extruder (model EBV 19/25, with a 19 mm screw diameter and 1:25 ratio), and 50 micron-thick films were prepared using Collin Cast Flat-die Extruder model 30 x 25 L/D (30 mm screw diameter, 1:25 diameter/length ratio).

Comparative Sample 2:

2.0% of polyterpenic resin Dercolyte® S125 and 0.35% of Manganese Stearate were mixed with low density polyethylene, Riblene®. Compounds and Film were prepared as described in Comparative Sample 1.

Comparative Sample 3:

2.0% of polyterpenic resin Dercolyte® S125 and 0.35% of Copper Stearate were mixed with low density polyethylene, Riblene®. Compounds and Film were prepared as described in Comparative Sample 1.

Comparative Sample 4:

2.0% of polyterpenic resin Dercolyte® S125 was mixed with low density polyethylene, Riblene®. Compounds and Film were prepared as described in Comparative Sample 1.

Inventive Sample 5:

2.0% of polyterpenic resin Dercolyte® S125 and 0.35% of Compound of Example 1 were mixed with low density polyethylene, Riblene®. Compounds and Film were prepared as described in Comparative Sample 1.

Inventive Sample 6:

2.0% of polyterpenic resin Dercolyte® S125 and 0.35% of Compound of Example 2 were mixed with low density polyethylene, Riblene®. Compounds and Film were prepared as described in Comparative Sample 1.

Inventive Sample 7:

2.0% of polyterpenic resin Dercolyte® S125 and 0.35% of Compound of Example 3 were mixed with low density polyethylene, Riblene®. Compounds and Film were prepared as described in Comparative Sample 1.

Inventive Sample 8:

2.0% of polyterpenic resin Dercolyte® S125 and 0.35% of Compound of Example 4 were mixed with low density polyethylene, Riblene. Compounds and film were prepared as described in Comparative Sample 1.

Inventive Sample 9:

2.0% of polyterpenic resin Dercolyte® S125 and 0.35% of Compound of Example 5 were mixed with low density polyethylene, Riblene®. Compounds and Film were prepared as described in Comparative Sample 1.

Inventive Sample 10:

2.0% of polyterpenic resin Dercolyte® S125 and 0.35% of Compound of Example 6 were mixed with low density polyethylene, Riblene®. Compounds and Film were prepared as described in Comparative Sample 1.

Inventive Sample 11:

2.0% of polyterpenic resin Dercolyte® S125 and 0.35% of Compound of Example 7 were mixed with low density polyethylene, Riblene®. Compounds and Film were prepared as described in Comparative Sample 1.

Several aliquots of film for each sample were then exposed to air (20.7 % $O_2$) in 500 ml sealed flasks provided with a septum that allowed portions of the inside atmosphere to be drawn for analysis at several intervals using a syringe. Oxygen concentration measures were carried out using a Mocon Pac Check 450 head space analyzer over 28 days. The actual metals concentration (Iron, Copper, Manganese) in Examples 1 to 7, in Comparative Samples 1 to 4 and in Inventive Samples 5, 7, 8, 9, 10 was measured by ICP -OES (Inductively Coupled Plasma - Optical Emission Spectrometer, Perkin Elmer Optima Series 4200DV). The results in terms of ml $O_2$/g. of active scavenger are given in Table 1.

Averaged oxygen scavenger activity (ml $O_2$/g. Scavenger) for six different LDPE film measured after 28 days. In case of Comparative Sample 1: g. of active scavenger = g. of iron in the film; in all the other cases: g. of active scavenger = g. of Dercolyte + g. of metal complex

Table 1:

| | ml $O_2$ absorbed by g. Scavenger After 28 Days |
|---|---|
| Comparative Sample 1 | 44 |
| Comparative Sample 2 | 73 |
| Comparative Sample 3 | No $O_2$ uptake detectable |
| Comparative Sample 4 | No $O_2$ uptake detectable |
| Inventive Sample 5 | 75 |
| Inventive Sample 7 | 137 |
| Inventive Sample 8 | 92 |
| Inventive Sample 9 | 113 |
| Inventive Sample 10 | 110 |

Table 1 clearly shows that oxygen scavenger reactivity of Inventive Samples from 7 to 10 is greater than the oxygen scavenger activity of Comparative Samples from 1 to 4.

The amount of oxygen adsorbed by the test samples was determined from the change in the oxygen concentration in the head space of a sealed glass container. The test container had a headspace volume of about 500 ml and contained atmospheric air so that about 100 ml of oxygen were available for reaction. In all the examples oxygen scavenger component percentages are in weight percents based on total weight of the film composition.

Detailed description of Oxygen uptake Method:

Film thickness is measured and 4.0 grams of film are weighted. The extruded film is folded and placed in a clean 500 ml sealed glass container. A vial containing 15 ml of deionized water is added to produce 100% relative humidity inside the glass container (only for Comparative Sample 1).
The oxygen content in the ambient air on day 0 (i.e. equal to the initial oxygen content in the sealed glass container) is tested and recorded using a Mocon Oxygen Analyzer.
The glass containers with test films and water vials are stored at 22°C (generally, room temperature) for 28 days.
The oxygen content in the sealed glass containers using a Mocon Oxygen Analyzer on day 28 are tested and recorded.
Based on the measured oxygen concentration that is left in the sealed glass container the volume of oxygen absorbed per gram of Scavenger has been calculated using the formula:

$$\text{Oxygen absorbed (ml/g)} = \{(\%\ O_2)_i - (\%\ O_2)_f\} * 0.01 * V_j / ( W_F * W_S / W_B )$$

where:

| | |
|---|---|
| $(\%\ O_2)_i$ | Initial oxygen concentration in the sealed glass container (%) |
| $(\%\ O_2)_f$ | Oxygen concentration in the sealed glass container at day of test (%) |
| 0.01: | Conversion factor |
| $V_j$: | Free air volume of the sealed glass container (ml) (total volume of the sealed glass container less space occupied by vial and film, typically 440 ml) |
| $W_F$: | Weight of film placed into the glass container (typically 4.0 g) |
| $W_S$: | Weight of Oxygen Scavenger used to make blend (g) |
| $W_B$: | Total weight of blend (g) |

## Claims

1. An oxygen scavenger composition for food packaging application comprising

   (I) a polymeric resin,
   (II) a metal organic oxidation additive based on a chelating aromatic or non aromatic amine and transition metal complex,
   (III) a sacrificial oxidizable substrate,
   and optionally
   (IV) additional components.

2. The oxygen-scavenging composition according to claim 1 wherein the polymeric resin is a thermoplastic polymer selected from the group consisting of homo- and copolymers of olefin monomers, homo- and copolymers of olefin monomers with diolefin monomers, cyclic olefins, copolymers of one ore more 1-olefins and/or diolefins with carbon monoxide and/or with other vinyl monomers and polyvinyl alcohol.

3. The oxygen-scavenging composition according to claim 1 and claim 2 wherein the metal organic oxidation additive based on a chelating aromatic or non aromatic amine and transition metal complex comprise Co, Ce, Mn, Cu, Ni, Vd, Fe and/or Ti.

4. The oxygen-scavenging composition according to any of claims 1 to 3 wherein the sacrificial oxidizable substrate is selected from the group consisting of polybutadiene, polyester, squalane, squalene, polystyrene, poly-limonene, poly alpha pinene, poly beta pinene, poly-norbornene, polylactic acid and mixture of linear and branched alkyl chains $C_6$-$C_{30}$alcohols.

5. The oxygen-scavenging composition according to any of claims 1 to 4 wherein the oxygen-scavenging composition further comprises one or more additional components selected from the group containing fillers, reinforcing agents, pigments, light stabilizers, antioxidans, antislip and antblock additives, plasticizers, optical brighteners, antistatic agents and blowing agents.

6. The oxygen-scavenging composition according to any of claims 1 to 5 with the proviso that components (I) and (III) are different.

7. The oxygen-scavenging composition according to any of claims 1 to 6, wherein component (III) is a polyterpenic resin.

8. An article containing a composition as defined in any of claims 1 to 7.

9. An article according to claim 8, which is a film, a sheet or a laminate.

10. An article according to claim 9 which is a coextruded multilayer film.

11. An article according to claim 9 which is a food packaging.

12. The use of the oxygen-scavenger composition as defined in claim 1 in food packaging.

**Patentansprüche**

1. Sauerstofffänger-Zusammensetzung für Lebensmittelverpackungsanwendungen, umfassend

   (I) ein Polymerharz,
   (II) ein metallorganisches Oxidationsadditiv auf Basis eines Komplexes eines chelatisierenden aromatischen oder nichtaromatischen Amins und eines Übergangsmetalls,
   (III) ein oxidierbares Opfersubstrat und gegebenenfalls
   (IV) zusätzliche Komponenten.

2. Sauerstofffänger-Zusammensetzung nach Anspruch 1, wobei es sich bei dem Polymerharz um ein thermoplastisches Polymer aus der Gruppe bestehend aus Homo- und Copolymeren von Olefinmonomeren, Homo- und Copolymeren von Olefinmonomeren mit Diolefinmonomeren, cyclischen Olefinen, Copolymeren von einem oder mehreren 1-Olefinen und/oder Diolefinen mit Kohlenmonoxid und/oder mit anderen Vinylmonomeren und Polyvinylalkohol handelt.

3. Sauerstofffänger-Zusammensetzung nach Anspruch 1 und Anspruch 2, wobei das metallorganische Oxidationsadditiv auf Basis eines Komplexes eines chelatisierenden aromatischen oder nichtaromatischen Amins und eines Übergangsmetalls Co, Ce, Mn, Cu, Ni, Vd, Fe und/oder Ti umfasst.

4. Sauerstofffänger-Zusammensetzung nach einem der Ansprüche 1 bis 3, wobei das oxidierbare Opfersubstrat aus der Gruppe bestehend aus Polybutadien, Polyester, Squalan, Squalen, Polystyrol, Polylimonen, Poly-alpha-pinen, Polybeta-pinen, Polynorbornen, Polymilchsäure und Mischungen von $C_6$-$C_{30}$-Alkoholen mit linearen und verzweigten Alkylenketten ausgewählt ist.

5. Sauerstofffänger-Zusammensetzung nach einem der Ansprüche 1 bis 4, wobei die Sauerstofffänger-Zusammensetzung ferner eine oder mehrere zusätzliche Komponenten aus der Gruppe enthaltend Füllstoffe, Verstärkungsmittel, Pigmente, Lichtschutzmittel, Antioxidantien, Antislip- und Antiblockadditive, Weichmacher, optische Aufheller, Antistatika und Treibmittel umfasst.

6. Sauerstofffänger-Zusammensetzung nach einem der Ansprüche 1 bis 5 mit der Maßgabe, dass die Komponenten (I) und (III) verschieden sind.

7. Sauerstofffänger-Zusammensetzung nach einem der Ansprüche 1 bis 6, wobei es sich bei der Komponente (III) um ein Polyterpenharz handelt.

8. Artikel, enthaltend eine Zusammensetzung gemäß einem der Ansprüche 1 bis 7.

9. Artikel nach Anspruch 8, bei dem es sich um eine Folie, eine Platte oder ein Laminat handelt.

10. Artikel nach Anspruch 9, bei dem es sich um eine coextrudierte Mehrschichtfolie handelt.

**11.** Artikel nach Anspruch 9, bei dem es sich um eine Lebensmittelverpackung handelt.

**12.** Verwendung der Sauerstofffänger-Zusammensetzung gemäß Anspruch 1 bei der Lebensmittelverpackung.

## Revendications

**1.** Composition de désactivation d'oxygène pour une application d'emballage alimentaire, comprenant

(I) une résine polymère,
(II) un additif d'oxydation organique métallique à base d'un complexe de métal de transition et d'une amine aromatique ou non aromatique de chélation,
(III) un substrat oxydable sacrificiel,
et éventuellement
(IV) des composants supplémentaires.

**2.** Composition de désactivation d'oxygène selon la revendication 1, dans laquelle la résine polymère est un polymère thermoplastique choisi dans le groupe constitué par les homo- et copolymères de monomères d'oléfine, les homo- et copolymères de monomères d'oléfine avec des monomères de dioléfine, les oléfines cycliques, les copolymères d'une ou plusieurs 1-oléfines et/ou dioléfines avec du monoxyde de carbone et/ou avec d'autres monomères vinyliques et de l'alcool polyvinylique.

**3.** Composition de désactivation d'oxygène selon la revendication 1 et la revendication 2, dans laquelle l'additif d'oxydation organique métallique à base d'un complexe de métal de transition et d'une amine aromatique ou non aromatique de chélation comprend du Co, Ce, Mn, Cu, Ni, Vd, Fe et/ou Ti.

**4.** Composition de désactivation d'oxygène selon l'une quelconque des revendications 1 à 3, dans laquelle le substrat oxydable sacrificiel est choisi dans le groupe constitué par le polybutadiène, le polyester, le squalane, le squalène, le polystyrène, le poly-limonène, le poly-alpha-pinène, le poly-bêta-pinène, le poly-norbornène, l'acide polylactique et un mélange de $C_6$-$C_{30}$alcools à chaîne alkyle linéaire ou ramifiée.

**5.** Composition de désactivation d'oxygène selon l'une quelconque des revendications 1 à 4, où la composition de désactivation d'oxygène comprend en outre un ou plusieurs composants supplémentaires choisis dans le groupe constitué par les charges, les agents renforçants, les pigments, les photostabilisants, les antioxydants, les additifs anti-glissants et anti-adhérents, les plastifiants, les azurants optiques, les agents antistatiques et les agents d'expansion.

**6.** Composition de désactivation d'oxygène selon l'une quelconque des revendications 1 à 5, à condition que les composants (I) et (III) soient différents.

**7.** Composition de désactivation d'oxygène selon l'une quelconque des revendications 1 à 6, dans laquelle le composant (III) est une résine polyterpénique.

**8.** Article contenant une composition telle que définie selon l'une quelconque des revendications 1 à 7.

**9.** Article selon la revendication 8, qui est un film, une feuille ou un stratifié.

**10.** Article selon la revendication 9, qui est un film multicouches co-extrudé.

**11.** Article selon la revendication 9, qui est un emballage alimentaire.

**12.** Utilisation de la composition de désactivation d'oxygène telle que définie selon la revendication 1, dans le domaine de l'emballage alimentaire.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 56121634 A


### Non-patent literature cited in the description


- *CHEMICAL ABSTRACTS,* 136504-96-6
- *CHEMICAL ABSTRACTS,* 192268-64-7
- *CHEMICAL ABSTRACTS,* 106917-31-1